# EUROPÄISCHE PATENTSCHRIFT

(11) **EP 2 998 937 B1**
(45) Veröffentlichungstag und Bekanntmachung des Hinweises auf die Patenterteilung: **27.12.2017**
(21) Anmeldenummer: 15185665.5
(22) Anmeldetag: 17.09.2015
(51) Int. Cl.: G06T 11/00, B60R 1/00

(54) **ANZEIGEEINRICHTUNG FÜR FAHRZEUGE, INSBESONDERE NUTZFAHRZEUGE**
DISPLAY APPARATUS FOR VEHICLES, IN PARTICULAR FOR COMMERCIAL VEHICLES
DISPOSITIF D'AFFICHAGE POUR VEHICULES, NOTAMMENT VEHICULES UTILITAIRES

(30) Priorität: 19.09.2014 DE 102014014662
(43) Veröffentlichungstag der Anmeldung: 23.03.2016
(73) Patentinhaber: MEKRA Lang North America, LLC, Ridgeway, SC 29130 (US)
(72) Erfinder: ENZ, Andreas, Columbia, SC 29223 (US); LANG, Werner, 91465 Ergersheim (DE)
(74) Vertreter: Kramer Barske Schmidtchen Patentanwälte PartG mbB

(56) Entgegenhaltungen:
- DE-A1-102010 010 912
- DE-A1-102010 042 026
- US-A1- 2014 036 064

## Beschreibung

Die vorliegende Erfindung betrifft eine Anzeigeeinrichtung für Fahrzeuge, insbesondere Nutzfahrzeuge.

Üblicherweise sind Fahrzeuge mit Einrichtungen zur indirekten Sicht in die unmittelbare Fahrzeugumgebung, wie beispielsweise Seitenspiegel, ausgestattet. An Nutzfahrzeugen ist beispielsweise als Einrichtung zur indirekten Sicht ein Hauptspiegel auf jeweils der Fahrerseite und der Beifahrerseite vorgesehen, mit welchem der Fahrzeugführer einen ebenen und horizontalen Teil der Fahrbahn von bestimmter Breite einsehen kann, der sich ab einer festgelegten Entfernung hinter den Augenpunkten des Fahrzeugführers bis zum Horizont erstreckt. Ein Streifen geringerer Breite ist ebenfalls mittels dieser Spiegel für den Fahrzeugführer einsehbar, der jedoch bereits in kürzerer Entfernung hinter den Augenpunkten des Fahrers beginnt.

Neben diesen Hauptspiegeln sind beidseitig des Nutzfahrzeugs ferner Weitwinkelspiegel vorgesehen, mit denen jeweils ein Bereich hinter den Augenpunkten des Fahrers in einer bestimmten Erstreckung in Längsrichtung des Fahrzeugs eingesehen werden kann, welcher breiter als der durch den Hauptspiegel einsehbare Bereich ist, sich jedoch nur eine bestimmte Länge entlang des Fahrzeugs erstreckt.

Darüber hinaus sind Einparkhilfen für Personenkraftwagen bekannt, bei denen ein im Fahrzeuginneren angeordnetes Display zumindest eine stilisierte Aufnahme des Personenraftwagens aus der Vogelperspektive anzeigen kann. Sensoren können einen unmittelbaren Bereich um den Personenkraftwagen herum erfassen. Wenn eine entsprechende Erfassung eines Hindernisses vorliegt, blinken entsprechende Symbole auf dem Display auf.

In letzter Zeit ist es zunehmend angedacht, neben herkömmlichen Spiegeln als Einrichtungen zur indirekten Sicht entweder in Ergänzung oder als Ersatz für die Spiegel Kamerasysteme bzw. Bildaufnahmesysteme als Einrichtungen zur indirekten Sicht einzusetzen. Bei solchen Bildaufnahmesystemen erfasst eine Bildaufnahmeeinheit kontinuierlich ein Bild, wobei diese von der Bildaufnahmeeinheit erfassten (Video-)Daten, beispielsweise mittels einer Berechnungseinheit und, gegebenenfalls nach Weiterbearbeitung, an eine im Fahrerhaus befindliche Wiedergabeeinrichtung geliefert werden, welche für den Fahrer dauerhaft und jederzeit einsehbar den entsprechenden Umgebungsbereich des Fahrzeugs und ggf. ergänzende Information, wie z. B. Kollisionshinweise, Abstände und Ähnliches, für den Bereich rund um das Fahrzeug darstellt.

Trotz dieser vorgeschriebenen Spiegel bzw. Einrichtungen für indirekte Sicht ist es jedoch für einen Fahrzeugführer kaum möglich bzw. sehr schwierig, die unfallkritischen Bereiche rund um ein Nutzfahrzeug jederzeit vollständig und ausreichend im Auge zu behalten. Zudem ist aufgrund der Vielzahl der Spiegel die Anforderung an den Fahrzeugführer erhöht, diese Spiegel nahezu gleichzeitig im Auge zu behalten.

Gerade bei Nutzfahrzeugen wie LKWs, Bussen etc. ist die Einsehbarkeit auf den Fahrerseiten kritisch. Hindernisse und andere Verkehrsteilnehmer werden schlecht erkannt, da die Bereiche der toten Winkel verhältnismäßig groß sind und somit Hindernisse, wie beispielsweise andere Verkehrsteilnehmer, in der Einrichtung zur indirekten Sicht nicht erkennbar sind. Auch ist die Orientierung für den Fahrer auf den verhältnismäßig zahlreichen Einrichtungen für indirekte Sicht schwierig, so dass die Gefahr besteht, dass gerade bei Abbiege- oder Rangiervorgängen Hindernisse übersehen werden, obwohl sie in der Einrichtung für indirekte Sicht abgebildet sind. So werden häufig Unfälle aufgrund dessen verursacht, dass der Fahrer des Nutzfahrzeugs nicht ausreichenden Einblick in seitliche Bereiche des Fahrzeugs besitzt, insbesondere in die toten Winkel, die einen seitlichen Bereich neben dem Fahrzeug darstellen, der durch den Fahrer trotz der oben beschriebenen Außenspiegel kaum bzw. nicht einsehbar ist.

Daher ist es bekannt, Hindernisse auf einem Wiedergabebild durch graphische Einblendung, wie beispielsweise farbige Rahmen oder dergleichen, hervorzuheben. Auch akustische bzw. visuelle Warnsignale mittels Lautsprechern bzw. Lichteffekten zum Hinweisen auf Hindernisse, die sich in der unmittelbaren Fahrzeugumgebung befinden, sind bekannt. Nachteilig hierbei ist, dass durch die graphischen Einblendungen Teile des Wiedergabebilds verdeckt werden und dadurch häufig die genaue Lokalisierung des Hindernisses auf dem Wiedergabebild nicht eindeutig ist bzw. die Orientierung für den Fahrer auf dem Wiedergabebild erschwert ist.

DE 10 2010 042 026 A1 offenbart ein Verfahren und eine Vorrichtung zum Erzeugen eines Abbildes mindestens eines Objekts in einer Umgebung eines Fahrzeuges, bei dem das Objekt Bereiche aufweist, die von einem Sensor/Kamera des Fahrzeuges nicht einsehbar sind.

US 2014/0036064 A1 offenbart ein Sichtsystem für ein Fahrzeug, das insbesondere für Rückwärtsfahrt des Fahrzeuges geeignet ist.

DE 10 2010 010912 A1 offenbart eine Fahrerassistenzvorrichtung mit optischer Darstellung erfasster Objekte.

Ferner offenbart die DE 10 2011 010 624 A1 eine Anzeigevorrichtung für gesetzlich vorgeschriebene Sichtfelder eines Nutzfahrzeugs in einem Fahrerhaus des Nutzfahrzeugs, die mindestens eine Anzeigeeinheit aufweist, die dazu angepasst ist, mindestens zwei der gesetzlich vorgeschriebenen Sichtfelder dauerhaft und in Echtzeit auf der Anzeigeeinheit im Fahrerhaus anzuzeigen.

In der US 8,810,381 B2 ist ein Head Up Display für ein Fahrzeug mit einem Kollisionswarnsystem offenbart. Dabei werden mehrere Informationspunkte in einer Reihe auf die Windschutzscheibe projiziert, die mit dem vom Fahrer direkt erfassten realen Bild überlagert ist.

Aus der US 7 592 928 B2 ist eine Vorrichtung und ein Verfahren zur Bilddarstellung bekannt, die es erlauben, jegliche Unterschiede zwischen der Relativposition eines Hindernisses, wie es in einer Bilddarstellung in Vogelperspektive und in seiner aktuellen Relativposition erscheint, auf der gleichen Anzeige überprüft werden können. Dazu wird aus verschiedenen erfassten Bildern ein Bild in Vogelperspektive erstellt, das die Fahrzeugumgebung anzeigen kann. Daraufhin wird das Bild mit Vogelperspektive und ein einzelnes von einer Kamera erfasstes Bild gleichzeitig dargestellt, wenn ein Hindernis in der Fahrzeugumgebung erfasst wurde.

Weitere Fahrerassistenzsysteme sind aus der US 8 305 204 B2, US 2014/0118551 A1, US 2008/0205706 A1 und US 8 305 444 B2 bekannt.

Bei den bekannten Systemen und Verfahren wird jeweils zumeist ein mit einer Kamera erfasstes reales Bild in Echtzeit von einer Wiedergabeeinheit für den Fahrer einsehbar dargestellt, um dem Fahrer einen Einblick in schwer einsehbare Bereiche zu verschaffen. Die von der Kamera erfassten realen Bilder sind eine detailgetreue Abbildung der zum Zeitpunkt der Erfassung vorherrschenden Szenerie der Fahrzeugumgebung. Somit weisen die von der Kamera erfassten realen Bilder eine Fülle von Informationen auf, die jedoch nur teilweise für den Fahrer des Fahrzeugs von Interesse sein können.

Davon ausgehend ist es Aufgabe der Erfindung eine Anzeigeeinrichtung für ein Fahrzeug, insbesondere Nutzfahrzeug, bereitzustellen, das den Fahrer zuverlässig und vereinfacht über sich in der Fahrzeugumgebung befindliche Hindernisse informiert.

Diese Aufgabe wird mit einer Anzeigeeinrichtung für Fahrzeuge, insbesondere Nutzfahrzeuge, mit den Merkmalen des Anspruchs 1 gelöst. Bevorzugte Ausführungsformen sind in den abhängigen Ansprüchen angegeben.

In der Beschreibung dieser Erfindung beziehen sich Richtungsangaben auf ein Fahrzeug, insbesondere Nutzfahrzeug, bei normaler Vorwärtsfahrt. In seitlicher Richtung bedeutet somit diejenige Richtung, die entlang der Senkrechten zu einem Vorwärtsfahrtrichtungsvektor des Kraftfahrzeugs ist und der Links-Rechts-Richtung entspricht. Ferner beschreibt der Begriff "unmittelbare Fahrzeugumgebung" einen Bereich, der sich direkt vom Fahrzeug angrenzend zu einem vorbestimmten Abstand, beispielsweise ungefähr 5 m, und um das Fahrzeug herum erstreckt. Im Gegensatz dazu beschreibt der Begriff "entfernte Fahrzeugumgebung" einen Bereich, der an die "unmittelbare Fahrzeugumgebung" angrenzt und sich von der unmittelbaren Fahrzeugumgebung nach außen erstreckt. Beispielsweise beschreibt der Begriff "entfernte Fahrzeugumgebung" einen Bereich um das Fahrzeug herum, der beispielsweise mehr als die oben beschriebenen 5 m vom Fahrzeug beabstandet ist. Ferner ist unter einer "stilisierten Darstellung" eine Darstellung eines Objekts zu verstehen, dessen Erscheinungsbild, wie es in der Natur bzw. Wirklichkeit vorkommt, abstrahiert und nur in seinen wesentlichen Grundstrukturen dargestellt wird. Außerdem beschreibt eine "symbolische Darstellung" eine Darstellung eines Objekts, dessen Erscheinungsbild, wie es in der Natur bzw. Wirklichkeit vorkommt, stark abgewandelt und mit einer vorbestimmten Symbolform dargestellt wird.

Ferner beziehen sich Hindernisse in der Beschreibung dieser Erfindung auf jegliche Objekte, die sich während einer Fahrt mit einem Fahrzeug, insbesondere Nutzfahrzeug, in der unmittelbaren oder entfernten Fahrzeugumgebung befinden können. Als Hindernisse sind beispielsweise Objekte gemeint, die für den Fahrer von Interesse sind, z. B. diejenigen Objekte, mit denen das Fahrzeug kollidieren und einen Unfall verursachen kann. Als beispielhafte Hindernisse sind insbesondere bewegliche Objekte, wie beispielsweise andere Verkehrsteilnehmer, Fahrzeuge, Fahrradfahrer, Motorradfahrer, Fußgänger, etc. zu nennen, für die zumeist eine erhöhte Gefahr von dem Fahrzeug ausgeht und die eine erhöhte Gefahr für das Fahrzeug darstellen.

Es sind aber auch neben den beweglichen Hindernissen auch stationäre Objekte, wie beispielsweise Straßenschilder, Straßenpfosten, Straßenlaternen, Mülltonnen, Litfaßsäulen, parkende Fahrzeuge oder sonstige nicht bewegliche Objekte zu nennen, die unter Umständen für den Fahrer auch von Interesse sein können. Beispielsweise kann dies bei einem Auspark- oder Rangiervorgang von Vorteil sein, damit der Fahrer nicht versehentlich eines der stationären Objekte übersieht und mit diesem eine Kollision verursacht. Bevorzugt sind es jedoch die beweglichen Objekte, die für den Fahrer primär von Interesse sind. Es können jedoch zusätzlich diejenigen stationären Objekt Hindernisse im Sinne der vorliegenden Anmeldung sein, die für das aktuelle Fahrverhalten und Fahrmanöver für den Fahrer von Interesse sind und kritisch sein, beispielsweise eine an einer Kreuzung befindliche Straßenlaterne im Bereich der Fahrspur bei einem Abbiegevorgang.

Der Erfindung liegt der Gedanke zugrunde, eine Anzeigeeinrichtung für ein Fahrzeug, insbesondere Nutzfahrzeug, bereitzustellen, die eine am Fahrzeug anbringbare Erfassungsvorrichtung, eine mit der Erfassungsvorrichtung in Verbindung stehende Berechnungseinheit und eine mit der Berechnungseinheit in Verbindung stehende Wiedergabeeinheit aufweist. Die Erfassungsvorrichtung ist dazu ausgebildet, zumindest einen Teil der unmittelbaren Fahrzeugumgebung zu erfassen und dem erfassten Teil der unmittelbaren Fahrzeugumgebung entsprechende Signale zu erzeugen. Die Berechnungseinheit ist dazu ausgebildet, die von der Erfassungsvorrichtung erzeugten Signale zu empfangen, Hindernisse in der erfassten Fahrzeugumgebung zu ermitteln und ein Wiedergabebild zu erzeugen. Das Wiedergabebild enthält das Fahrzeug in stilisierter oder symbolischer Darstellung und, sofern zumindest ein Hindernis ermittelt worden ist, das zumindest eine ermittelte Hindernis in stilisierter oder symbolischer Darstellung. Das zumindest eine ermittelte Hindernis befindet sich dabei auf dem Wiedergabebild relativ zum Fahrzeug derart angeordnet, wie es sich in Wirklichkeit relativ zum Fahrzeug befindet. Die Wiedergabeeinheit ist dazu ausgebildet, das von der Berechnungseinheit erzeugte Wiedergabebild im Inneren des Fahrzeugs durch den Fahrer einsehbar darzustellen.

Durch die erfindungsgemäße Anzeigeeinrichtung wird dem Fahrer ein Wiedergabebild bereitgestellt, das das Fahrzeug und zumindest ein ermitteltes Hindernis, das sich in unmittelbarer Fahrzeugumgebung befindet, jeweils stilisiert oder symbolisch darstellt. Dadurch kann dem Fahrer die aktuelle Fahrzeugumgebung stilisiert und vereinfacht dargestellt und dem Fahrer schnell, unkompliziert und zuverlässig die relevanten Informationen über etwaigen Hindernisse in der unmittelbaren Fahrzeugumgebung verschafft werden. Somit werden dem Fahrer nur die für ihn nötigen und relevanten Informationen der Fahrzeugumgebung bereitgestellt und angezeigt, weshalb sich der Fahrer "auf einen Blick" über die Fahrzeugumgebung informieren kann, ohne durch zusätzliche, irrelevante und für den Fahrer störende und irritierende Informationen abgelenkt zu werden. Beispielsweise sind als zusätzliche, irrelevante und für den Fahrer störende und irritierende Informationen (Video)Anzeigen zu nennen, die z. B. unkritische Objekte wie Bäume, Gebäude, Hintergründe und unkritische Objekte aufweisen. Vorzugsweise hat das Wiedergabebild einen neutralen Hintergrund, beispielsweise einen einfarbigen Hintergrund, auf dem das Fahrzeug und die ermittelten Hindernisse stilisiert oder symbolisch dargestellt werden, damit der Fahrer schnell und einfach die nötigen Informationen ablesen kann.

Die Anzeigevorrichtung kann derart angepasst sein, dass sie zumindest zwei verschiedene Symbole, die jeweils unterschiedlichen Hindernissen zugeordnet sein können, insbesondere beweglichen und nicht beweglichen Hindernissen, gespeichert vorliegen hat und zumindest eines der Symbole zu einem jeweiligen Zeitpunkt anzeigen kann. Des Weiteren, wie nachfolgend noch detaillierter beschrieben, kann die Anzeigevorrichtung derart angepasst sein, dass die Auswahl der anzuzeigenden Symbole nach Entfernung des Hindernisses zum Fahrzeug (d.h. Relativposition) und/oder Art des Hindernisses (insbesondere bewegliches Hindernis oder stationäres Hindernis) getroffen wird.

Ferner kann die erfindungsgemäße Anzeigeeinrichtung die zeitliche Änderung der Darstellung des Hindernisses auf dem Wiedergabebild kontinuierlich, d.h. in Echtzeit, oder getaktet, d.h. in zeitlichen Abständen, erfolgen. So kann ein die Bewegung des Hindernisses auf dem Wiedergabebild fließend oder stockend, d.h. schrittweise, abgebildet werden.

Vorzugsweise stellt das Wiedergabebild das Fahrzeug und das ermittelte Hindernis in Draufsicht dar. In einer weiteren Ausgestaltung stellt das Wiedergabebild das Fahrzeug und das ermittelte Hindernis in Vogelperspektive in Vorwärtsrichtung des Fahrzeugs von hinten nach vorne dar, wobei auch andere bekannte Darstellungsperspektiven möglich sind. Mit den beiden genannten Perspektiven ist es für den Fahrer vereinfacht, sich schnell einen Überblick über die unmittelbare Fahrzeugumgebung zu verschaffen, da er sich an den stilisierten oder symbolischen Darstellungen, insbesondere des eigenen Fahrzeugs, schnell und zuverlässig orientieren kann.

In einer weiteren Ausgestaltung der erfindungsgemäßen Anzeigeeinrichtung kann die Art und/Größe des ermittelten Hindernisses bestimmt werden und die stilisierte oder symbolische Darstellung des ermittelten Hindernisses in Abhängigkeit der bestimmten Art und/oder Größe des Hindernisses modifiziert werden. Anhand der modifizierten Darstellung des Hindernisses bzw. des gewählten Symbols für das Hindernis kann der Fahrer auf dem Wiedergabebild schnell erkennen, um welche Hindernisart, beispielsweise Fußgänger, Fahrradfahrer, Motorradfahrer oder ein weiteres Fahrzeug, es sich handelt. Hierbei kann z. B. jeder Hindernisart ein unterschiedliches Symbol, wie beispielsweise Kreis, Rechteck, Quadrat, Dreieck oder sonstige Formen, zugeordnet werden, das auf die entsprechende Hindernisart hinweist. Zusätzlich oder alternativ kann die Größe des Hindernisses ermittelt und bei der stilisierten oder symbolischen Darstellung berücksichtigt werden. So kann z. B. ein kleines Fahrzeug mit einem kleineren Symbol dargestellt werden als ein großer Bus, wobei sowohl das kleine Fahrzeug als auch der große Bus mit dem gleichen Symbol dargestellt sein können.

In einer weiteren Ausgestaltung der erfindungsgemäßen Anzeigeeinrichtung kann ferner zumindest ein Teil einer entfernten Fahrzeugumgebung erfasst werden. Das Wiedergabebild kann derart modifiziert werden, dass das Wiedergabebild zumindest einen Hinweisbereich enthält, der auf das in der entfernten Fahrzeugumgebung ermittelte Hindernis und die Position des ermittelten Hindernisses relativ zum Fahrzeug hinweist. Beispielsweise kann das Wiedergabebild im unteren und/oder oberen Bereich jeweils einen Bildstreifen als Hinweisbereich aufweisen, der z. B. aufblinkt, sich verfärbt oder anderweitig einen Hinweis gibt, wenn ein Hindernis in der entfernten Fahrzeugumgebung erfasst wurde.

Vorzugsweise ist die Wiedergabeeinheit dazu ausgebildet, das Wiedergabebild auf die Frontscheibe des Fahrzeugs oder auf eine separat in der Fahrerzelle des Fahrzeugs angebrachte Leinwand, die transparent, semi-transparent oder nicht transparent ist, zu projizieren, beispielsweise mittels eines Head Up Displays oder eines OLED(Organic Light Emitting Diode)-Displays. Durch die Projektion des Wiedergabebildes auf die Frontscheibe wird ein zumindest teilweise transparentes Bild erzeugt, dass die direkte Sicht des Fahrers durch die Frontscheibe nur beschränkt beeinträchtigt. Somit kann der Fahrer aufgrund der direkten Sicht das Fahrzeug weiterhin sicher steuern, während er weiterhin mittels dem Wiedergabebild über etwaige Hindernisse in der unmittelbaren und entfernten Fahrzeugumgebung informiert wird. Vorzugsweise wird das Wiedergabebild auf einen unteren Bereich der Frontscheibe und mittig vor den Fahrer projiziert, so dass der Fahrer mit nur kleinen Augen- und Kopfbewegungen von der direkten Sicht auf das Wiedergabebild hin und wieder zurück auf die direkte Sicht schwenken kann. Dies trägt ebenfalls dem schnellen, unkomplizierten und zuverlässigen Informieren über die Fahrzeugumgebung bei.

In einer weiteren Ausgestaltung der erfindungsgemäßen Anzeigeeinrichtung kann das Wiedergabebild auch auf andere sich im Inneren des Fahrzeugs befindlichen Flächen, wie beispielsweise auf die A-Säule, projiziert werden. Alternativ kann das Wiedergabebild auf einem im Inneren des Fahrzeugs angeordneten Display ausgegeben werden, beispielsweise auf dem Display eines momentan nicht verwendeten Navigationsgeräts. In einer weiteren Ausgestaltung kann das Wiedergabebild auf einem separat in der Fahrerzelle des Fahrzeugs angeordneten Display oder Bildschirm für den Fahrer einsehbar dargestellt sein.

Vorzugsweise ist die Erfassungsvorrichtung dazu ausgebildet, die gesamte unmittelbare Fahrzeugumgebung zu erfassen, d. h. den sich vollständig unmittelbar um das Fahrzeug erstreckenden Bereich. Somit ist die erfindungsgemäße Anzeigeeinrichtung in der Lage, die gesamte unmittelbare Fahrzeugumgebung zu erfassen und hinsichtlich Hindernisse auszuwerten. Dem Fahrer kann deshalb ein Wiedergabebild bereitgestellt werden, das ihn über alle sich in der unmittelbaren Fahrzeugumgebung befindlichen Objekte informiert.

In einer weiteren Ausgestaltung der erfindungsgemäßen Anzeigeeinrichtung kann die Erfassungsvorrichtung die unmittelbare und entfernte Fahrzeugumgebung mittels Radarsensoren und/oder Ultraschallsensoren und/oder Bildaufnahmeeinheiten, wie beispielsweise Kameras, erfassen, die am Fahrzeug, insbesondere Nutzfahrzeug, anbringbar sind. Die Radarsensoren und/oder Ultraschallsensoren und/oder Bildaufnahmeeinheiten können an die Berechnungseinheit entsprechende Signale senden, die daraufhin hinsichtlich Hindernisse ausgewertet werden können. Alternativ oder zusätzlich können die Radarsensoren und/oder Ultraschallsensoren und/oder Bildaufnahmeeinheiten direkt ein Hindernis im erfassten Teil der Fahrzeugumgebung ermitteln und ein entsprechendes Signal an die Berechnungseinheit senden. Ferner kann es vorteilhaft sein, aus der zeitlichen Änderung des Orts des Hindernisses auf dem Wiedergabebild die Bewegungsgeschwindigkeit und/oder Bewegungsrichtung des Hindernisses festzustellen.

In einer weiteren Ausgestaltung der erfindungsgemäßen Anzeigeeinrichtung kann die Bestimmung der Art des Hindernisses basierend auf dem Bewegungsverhalten des erfassten Hindernisses erfolgen. Dabei können bereits zuvor ermittelte Hindernisdaten in einem Speicher der Berechnungseinheit gespeichert sein und beim Ermitteln erneuter Hindernisse berücksichtigt werden. Beispielsweise kann ein Fußgänger abrupte Richtungsänderungen durchführen, während ein anderes Fahrzeug, wie beispielsweise ein PKW, in einer bestimmten Zeit nur bestimmte Richtungsänderungen vollziehen kann.

In einer weiteren Ausgestaltung der erfindungsgemäßen Anzeigeeinrichtung kann das Wiedergabebild derart modifiziert werden, dass mehrere ermittelte Hindernisse gleicher Art, die sich relativ zum Fahrzeug in einem bestimmten Bereich befinden, zu einer Hindernisgruppe zusammengefasst und mit einem visuellen Hinweis, beispielsweise einer Klammer oder einem Rahmen um die Hindernisgruppe, versehen werden können. Dies führt zu einer zusätzlichen Vereinfachung des Wiedergabebildes und kann den Fahrer qualitativ über sich in der Klammer befindliche Hindernisse informieren und entsprechend darauf hinweisen.

In einer weiteren Ausgestaltung der erfindungsgemäßen Anzeigeeinrichtung weist das Wiedergabebild das stilisiert oder symbolisch dargestellte Fahrzeug dauerhaft auf. Ferner ist es bevorzugt, dass die Wiedergabeeinheit dazu ausgebildet ist, das von der Berechnungseinheit erzeugte und empfangene Wiedergabebild dauerhaft und in Echtzeit darzustellen. Dabei ist auch die Erfassungsvorrichtung vorzugsweise dazu ausgebildet, dauerhaft und in Echtzeit einen Teil der unmittelbaren und/oder entfernten Fahrzeugumgebung zu erfassen. Bevorzugt ist dann auch die Berechnungseinheit dazu ausgebildet, die empfangenen Signale dauerhaft und in Echtzeit zu verarbeiten. Dauerhaft bedeutet hier, dass beispielsweise die Darstellung des Wiedergabebildes nicht durch andere Angaben (zeitlich) unterbrochen wird, so dass der Fahrer jederzeit bei einem Blick auf die Wiedergabeeinheit in die Fahrzeugumgebung einsehen und auf relevante Hindernisse hingewiesen werden kann. Der Zustand, der mit "dauerhaft" beschrieben und davon umfasst werden soll, kann auch optional auf den Zündzustand des Fahrzeugs oder beispielsweise auf einen Zustand, in dem sich ein Fahrer im Fahrzeug befinden kann, z. B. abhängig vom Erfassen einer sich in der Nähe des Fahrzeugs oder im Fahrzeug befinden Schlüsseleinrichtung, ausgeweitet werden.

Außerdem ist es bevorzugt, dass sich das Fahrzeug zentral auf dem Wiedergabebild befindet, so dass die im Wiedergabebild enthaltene unmittelbare Fahrzeugumgebung an allen Seiten ungefähr gleich ist und der Fahrer somit gleichwertig über die gesamte unmittelbare Fahrzeugumgebung informiert wird.

In einer weiteren Ausgestaltung der erfindungsgemäßen Anzeigeeinrichtung kann die stilisierte oder symbolische Darstellung des Fahrzeugs anstelle in digitaler Form im Wiedergabebild als eine auf ein Display aufgebrachte Nachbildung des Fahrzeugs erfolgen. Beispielsweise kann zur Orientierung des Fahrers das Fahrzeug als Formteil auf das Display aufgeklebt sein, wobei dahinter auf dem Display das Wiedergabebild digital dargestellt wird, das lediglich die ermittelten Hindernisse darstellt.

In einer weiteren Ausgestaltung der erfindungsgemäßen Anzeigeeinrichtung kann die Bewegungsgeschwindigkeit und/oder Bewegungsrichtung des ermittelten Hindernisses bestimmt und die stilisierte oder symbolische Darstellung des ermittelten Hindernisses in Abhängigkeit der bestimmten Bewegungsgeschwindigkeit und/oder Bewegungsrichtung des Hindernisses modifiziert werden. Beispielsweise kann die Symbolform des Hindernisses auf dem Wiedergabebild in Abhängigkeit der Bewegungsgeschwindigkeit des Hindernisses verzerrt werden und kann bevorzugt somit die ungefähre Bewegungsrichtung und, in Abhängigkeit der Stärke der Verzerrung, die Bewegungsgeschwindigkeit des Hindernisses anzeigen. So kann ein stillstehender Fußgänger als kreisrunder Punkt dargestellt werden, wohingegen ein sich bewegender Fußgänger als ovaler oder elliptischer Punkt dargestellt werden kann. Zusätzlich oder alternativ kann dabei die Längsachse des ovalen oder elliptischen Punkt die Bewegungsrichtung des Hindernisses anzeigen. Zusätzlich oder alternativ kann die Berechnungseinheit im Wiedergabebild einen Pfeil erzeugen, der die Bewegungsrichtung des Hindernisses anzeigt. Die Länge des Pfeils kann dabei proportional zur Geschwindigkeit des Hindernisses gewählt werden.

In einer weiteren Ausgestaltung der erfindungsgemäßen Anzeigeeinrichtung kann das Wiedergabebild in mehrere Zonen unterteilt werden, die beispielsweise im Wesentlichen konzentrisch um das auf dem Wiedergabebild stilisiert oder symbolisch dargestellte Fahrzeug angeordnet sein können. Die mehreren Zonen stellen bevorzugt kritische und weniger kritische Zonen dar, wobei sich die kritischen Zonen näher am Fahrzeug befinden und die weniger kritischen Zonen vom Fahrzeug weiter entfernt sind. Die Zonen können beispielsweise in Form von Linien auf dem Wiedergabebild angezeigt oder alternativ unsichtbar sein. In Abhängigkeit der Position eines ermittelten Hindernisses relativ zum Fahrzeug kann die Berechnungseinheit ferner dazu ausgebildet sein, zu bestimmen, in welcher Zone sich das ermittelte Hindernis befindet. In Abhängigkeit davon kann die Berechnungseinheit dazu ausgebildet sein, die stilisierte oder symbolische Darstellung des Hindernisses auf dem Wiedergabebild modifizieren, beispielsweise in unterschiedlichen Farben oder in unterschiedlicher Helligkeit (Helligkeitsstufen) oder durch ein bestimmtes anderes Symbol oder in unterschiedlicher Größe darstellen. Mit anderen Worten kann die Anzeigevorrichtung das oder die Hindernisse in Abhängigkeit von dessen/deren Entfernung unterschiedlich darstellen.

In einer weiteren Ausgestaltung der erfindungsgemäßen Anzeigeeinrichtung kann das Wiedergabebild ferner derart modifiziert werden, dass das Wiedergabebild zusätzlich Fahrbahnlinien aufweist, die eine Spur des Fahrzeugs begrenzen. Sollte der Fahrer ungewollt von der Spur abweichen, beispielsweise ohne Setzen eines Blinkers, kann diejenige Fahrbahnlinie graphisch hervorgehoben werden, zu der das Fahrzeug von der optimalen Spur abweicht. Demzufolge kann die Berechnungseinheit ferner dazu beitragen, dem Fahrer eine Art Spurhalteassistenz bereitzustellen.

In einer weiteren Ausgestaltung der erfindungsgemäßen Anzeigeeinrichtung können die Fahrbahnlinien dauerhaft und/oder unveränderbar im Wiedergabebild dargestellt sein. Dabei können die dauerhaft dargestellten Fahrbahnlinien, die die Fahrspur des Fahrzeugs anzeigen, den Fahrer dabei unterstützen und die Funktion aufweisen, sich besser und schneller auf dem Wiedergabebild orientieren.

In einer weiteren Ausgestaltung der erfindungsgemäßen Anzeigeeinrichtung kann die Trajektorie des sich in der unmittelbaren Fahrzeugumgebung befindlichen Hindernisses aufgezeichnet und in Form einer Hindernisspur angezeigt werden, wobei die angezeigte Hindernisspur, bestehend aus verschieden vorangehend angezeigten Positionen des Hindernisses, zeitlich verblasst und transparent wird. Somit kann der Fahrer über die vergangene Trajektorie des Hindernisses informiert werden, woraus er möglicherweise eine zukünftige Trajektorie abschätzen kann.

In einer weiteren Ausgestaltung der erfindungsgemäßen Anzeigeeinrichtung kann die zukünf tige Trajektorie des Hindernisses abgeschätzt und auf dem Wiedergabebild mittels z. B. einem Pfeil oder einer zukünftigen Hindernisspur abgebildet werden. Dazu kann mittels Objekterkennung die Hindernisart bestimmt werden, wobei jeder bestimmten Hindernisart ein Bewegungsverhalten zugeordnet sein kann. Die zugeordneten Bewegungsverhalten können Hindernisspezifisch in einem Speicher oder einer Datenbank hinterlegt sein.

Nachfolgend wird die Erfindung beispielhaft anhand der beigefügten Figuren beschrieben, in denen:
- Fig. 1: eine schematische Darstellung der durch eine Einrichtung für indirekte Sicht abgebildeten Sichtbereiche darstellt,
- Fig. 2: eine schematische Darstellung der mittels direkter Sicht vom Fahrer eingesehenen Sichtbereiche darstellt,
- Fig. 3: eine beispielhafte Darstellung einer perspektivischen Darstellung eines Wiedergabebildes darstellt,
- Fig. 4: eine beispielhafte Darstellung einer weiteren perspektivischen Darstellung des Wiedergabebildes der Fig. 3 darstellt,
- Fig. 5: eine schematische Darstellung eines beispielhaften Innenraums eines Fahrzeugs darstellt, mit mehreren möglichen Anordnungen des Wiedergabebildes,
- Fig. 6a - 6b: ein beispielhaftes Wiedergabebild zu unterschiedlichen Zeitpunkten darstellt, das das Fahrzeug und ein in unmittelbarer Fahrzeugumgebung ermitteltes Hindernis in stilisierter bzw. symbolischer Darstellung aufweist,
- Fig. 7: ein weiteres beispielhaftes Wiedergabebild darstellt, das in mehrere Zonen unterteilt ist und das Fahrzeug und zwei verschiedene in unmittelbarer Fahrzeugumgebung ermittelte Hindernisse in stilisierter bzw. symbolischer Darstellung aufweist,
- Fig. 8: ein weiteres beispielhaftes Wiedergabebild darstellt, das einen zu einer Hindernisgruppe zusammengefassten Hinweis aufweist,
- Fig. 9: ein weiteres beispielhaftes Wiedergabebild darstellt, das einen oberen und unteren Hinweisbereich für Hindernisse aufweist, die auf sich in der entfernten Fahrzeugumgebung befindliche Hindernisse hinweisen,
- Fig. 10: ein weiteres beispielhaftes Wiedergabebild darstellt, das das Fahrzeug und Fahrbahnlinien zu einem Fahrzustand aufweist, während dem das Fahrzeug in der Spur gehalten wird,
- Fig. 11: ein weiteres beispielhaftes Wiedergabebild darstellt, das das Fahrzeug und Fahrbahnlinien zu einem Fahrzustand aufweist, während dem das Fahrzeug ungewollt von der optimalen Spur nach links abweicht, und
- Fig. 12: ein weiteres beispielhaftes Wiedergabebild darstellt, das das Fahrzeug und Fahrbahnlinien zu einem Fahrzustand aufweist, während dem das Fahrzeug beabsichtigt die Spur wechselt.

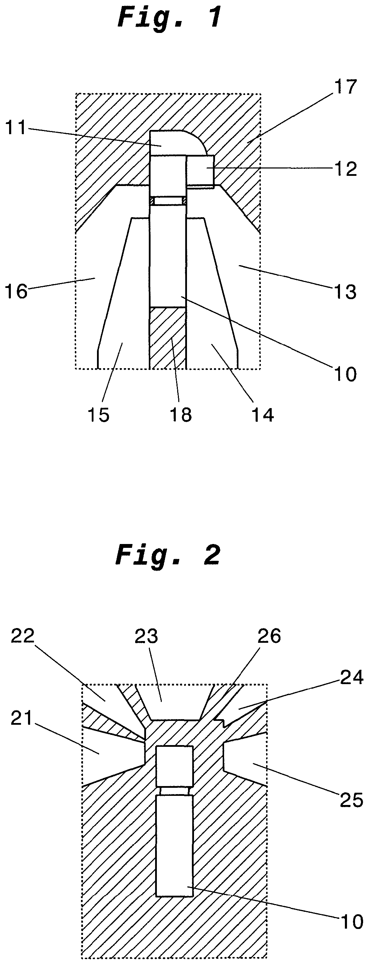

Die Fig. 1 stellt schematisch die unmittelbare Fahrzeugumgebung eines Fahrzeugs 10, insbesondere Nutzfahrzeugs, dar. Die nicht-schraffierten Bereiche 11 - 16 stellen jeweils Bereiche dar, die von einem Frontspiegel, einem vorderen Seitenspiegel und den Hauptspiegeln und den Weitwinkelspiegeln erfasst werden können. Demgegenüber stehen die in der Fig. 1 schraffierten Bereiche 17 und 18, die jeweils Bereiche darstellen, die von den Einrichtungen zur indirekten Sicht nicht erfasst werden können.

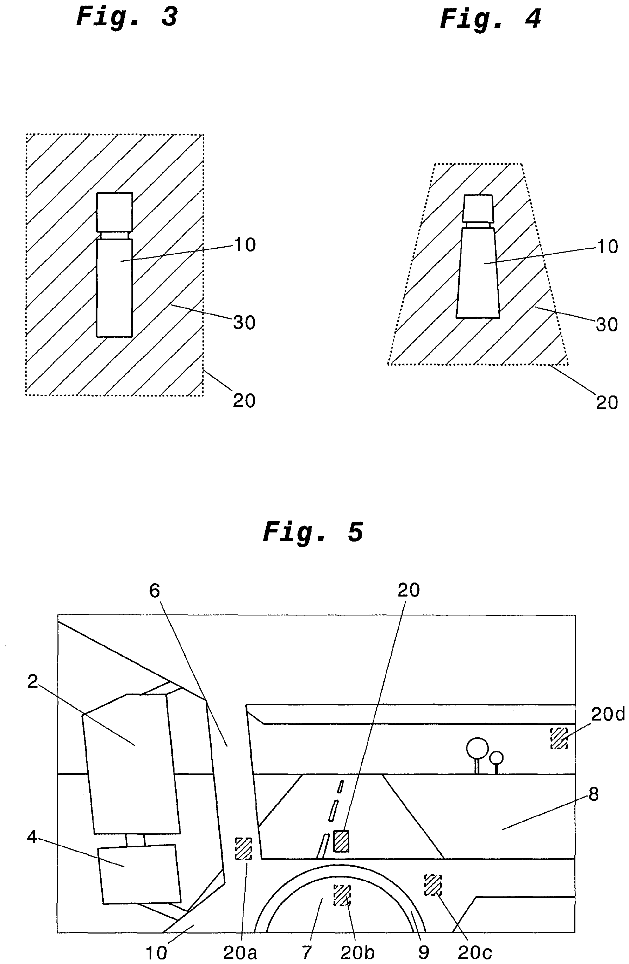

Unter Bezugnahme auf die Fig. 2 sind schematisch diejenigen Sichtbereich des Fahrzeugs 10 der Fig. 1 gezeigt, die vom Fahrer des Fahrzeugs 10 direkt erfasst werden können. Die nicht schraffierten Bereiche 21 - 25 stellen jeweils Bereiche dar, die direkt von Fahrer erfasst werden können. Demgegenüber steht der in der Fig. 2 schraffierte Bereich 26, der denjenigen Bereich darstellt, der vom Fahrer des Fahrzeugs 10 nicht direkt erfasst werden kann. Beispielsweise trennt der Bereich 26 die Bereiche 22 und 23 bzw. die Bereiche 23 und 26 deshalb voneinander, da die A-Säulen des Fahrzeugs 10 hier die direkte Sicht versperren. In Ähnlicher Weise sind es die außen am Fahrzeug 10 angeordneten Hauptspiegel und Weitwinkelspiegel (siehe Fig. 5), die dem Fahrer die direkte Sicht teilweise versperren, weshalb der Bereich 26 die Bereiche 21 und 22 bzw. die Bereich 24 und 25 voneinander trennt.

Aufgrund der jeweils nicht einsehbaren Bereiche 17, 18 und 26 der Fig. 1 und 2 gibt es einen Bedarf dafür, bevorzugt die gesamte unmittelbare Fahrzeugumgebung des Fahrzeugs zu erfassen und in einer gemeinsamen Darstellung derart darzustellen, damit der Fahrer des Fahrzeug zuverlässig und schnell über die gesamte unmittelbare Fahrzeugumgebung informiert werden kann. Hierzu zeigt die Fig. 3 ein von einer erfindungsgemäßen Anzeigeeinrichtung erzeugtes und für den Fahrer einsehbares Wiedergabebild 20. Das Wiedergabebild 20 weist eine in der Fig. 3 gezeigte stilisierte Darstellung des Fahrzeugs 10 und einen von einer Erfassungsvorrichtung der erfindungsgemäßen Anzeigeeinrichtung erfasste unmittelbare Fahrzeugumgebung 30 auf. Das Wiedergabebild 20 ist in der Fig. 3 in rechteckiger Gestalt gezeigt, wobei das Wiedergabebild 20 jede andere Form, wie beispielsweise rund, oval, elliptisch, dreieckig, trapezförmig, aufweisen kann. In der Fig. 3 ist das Fahrzeug 10 und die erfasste unmittelbare Fahrzeugumgebung 30 in Draufsicht dargestellt.

Unter Verweis auf die Fig. 4 ist das Wiedergabebild 20 in trapezförmiger Gestalt gezeigt und stellt das Fahrzeug 10 und die erfasste unmittelbare Fahrzeugumgebung 30 in Vogelperspektive in Vorwärtsrichtung des Fahrzeugs 10 von hinten nach vorne dar. Aufgrund der Vogelperspektive der Fig. 4 ist das Fahrzeug 10 auf dem Wiedergabebild 20 teilweise verzerrt dargestellt.

Die Fig. 5 zeigt schematisch die Fahrerzelle des Fahrzeugs 10 aus der Sicht eines Fahrers. Aus der Fig. 5 geht unter anderem hervor, dass der Hauptspiegel 2, der Weitwinkelspiegel 4 und die A-Säule 6 die direkte Sicht in die Fahrzeugumgebung teilweise versperren (siehe Fig. 2). Ferner sind in der Fig. 5 unterschiedliche Positionen gezeigt, an denen eine Wiedergabeeinheit der erfindungsgemäßen Anzeigeeinrichtung das Wiedergabebild 20 - 20d darstellen kann. Bevorzugt ist die Position des Wiedergabebildes 20 auf der Frontscheibe 8 des Fahrzeugs 10, wobei das Wiedergabebild 20 von der Wiedergabeeinheit, beispielsweise einem Projektor, Head Up Display oder OLED-Display projiziert werden kann. Das Wiedergabebild 20 befindet sich dabei bevorzugt am unteren Bereich der Frontscheibe 8 und mittig vor dem Fahrer, also knapp oberhalb des Lenkrades 9. Alternative Positionen für das Wiedergabebild 20a - 20d sind z. B eine Projektion auf die A-Säule 6, eine Darstellung in der Instrumententafel 7, eine Darstellung oder Projektion neben das Lenkrad 9 oder in einem oberen, im Wesentlichen mittigen Bereich der Frontscheibe 8.

In einer weiteren Ausgestaltung kann im Fahrzeuginneren eine separate Leinwand angebracht sein, auf die das Wiedergabebild 20 projiziert werden kann. Die Leinwand befindet sich bevorzugt zwischen dem Fahrer und der Frontscheibe 8, beispielsweise auf dem Armaturenbrett. Damit die Projektion des Wiedergabebilds 20 auf die Leinwand optimal ist, kann die Leinwand gegenüber der Frontscheibe 8 angewinkelt sein. Insbesondere Nutzfahrzeuge weisen nahezu vertikal verlaufende Frontscheiben auf, weshalb eine angewinkelte Leinwand zu einer besseren Projektion und Darstellung des Wiedergabebildes 20 führen kann. Die Leinwand kann dabei vollständig transparent, semitransparent oder sogar nicht transparent sein.

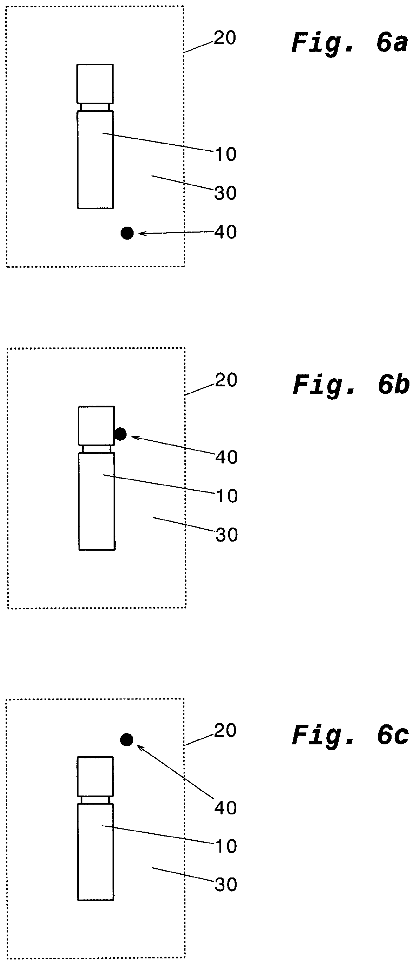

In den Fig. 6a - 6c sind beispielhafte Wiedergabebilder 20 zu verschiedenen Zeitpunkten gezeigt, die jeweils das Fahrzeug und ein in der unmittelbaren Fahrzeugumgebung 30 erfasstes Hindernis 40, wie z. B. einen Fußgänger, aufweisen. Das in den Fig. 6a bis 6c dargestellte Hindernis 40 ist symbolisch in Form eines kreisrunden Punkts im Wiedergabebild 20 enthalten. Zum Zweck der Veranschaulichung zeigen die Fig. 6a - 6c das Fahrzeug 10 an einer Kreuzung vor einer roten Ampel stehend. Zu einem ersten Zeitpunkt, der in der Fig. 6a gezeigt ist, befindet sich das Hindernis 40 noch rechts hinter dem Fahrzeug 10, beispielsweise auf einem im Wiedergabebild nicht dargestellten Bürgersteig. Zu einem späteren Zeitpunkt, der in der Fig. 6b gezeigt ist, hat sich das Hindernis 40 bis direkt neben das Fahrzeug 10 bewegt. In dieser Position kann der Fahrer das Hindernis nicht über die direkte Sicht und sogar nur schwer über die Seitenspiegel erfassen. Zu einem noch späteren Zeitpunkt, der in der Fig. 6c gezeigt ist, hat sich das Hindernis 40 noch weiter nach vorne bewegt und befindet sich nun rechts vor dem Fahrzeug 10. Auch zu diesem Zeitpunkt kann der Fahrer das Hindernis 40 über die direkte Sicht oder die Spiegel des Fahrzeugs 10 nur erschwert erfassen. Mit Hilfe der erfindungsgemäßen Anzeigevorrichtung kann jedoch dem Fahrer kontinuierlich oder in zeitlich getakteten Abständen ein Wiedergabebild bereitgestellt werden, dass ihn zu den in den Fig. 6a - 6b gezeigten Zeitpunkten über die unmittelbare Fahrzeugumgebung informiert und er schnell und zuverlässig das Hindernis 40 erfassen kann.

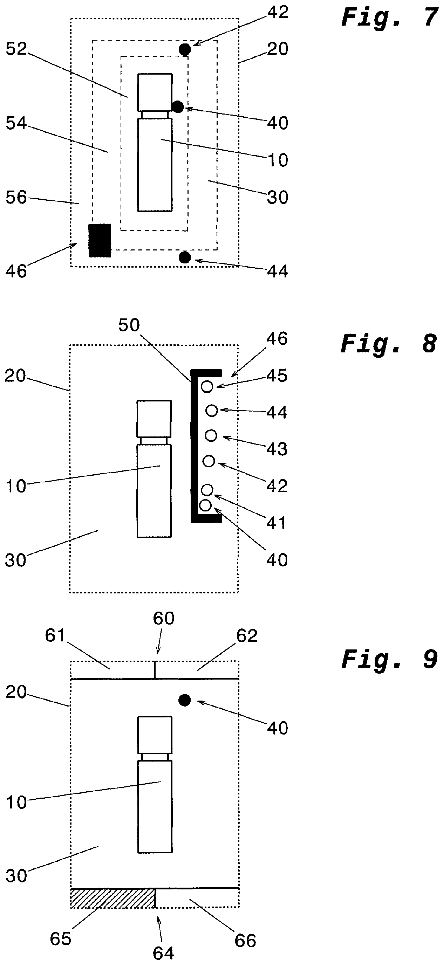

Die Fig. 7 zeigt ein beispielhaftes Wiedergabebild 20, das das Fahrzeug 10, ermittelte Hindernisse 40, 42 und 44, wie beispielsweise Fußgänger, und ein ermitteltes Hindernis 46, wie beispielsweise ein Fahrzeug, aufweist. Ferner geht aus der Fig. 7 hervor, dass die im Wiedergabebild 20 enthaltene unmittelbare Fahrzeugumgebung 30 in drei Zonen unterteilt ist, nämlich eine fahrzeugnahe Zone 52, eine mittlere Zone 54 und eine entferntere Zone 56. Die Zonen 52, 54, 56 sind jeweils mittels gestrichelter Linien voneinander abgegrenzt, wobei die gestrichelten Linien im Wiedergabebild 20 dargestellt werden können oder alternativ auf dem Wiedergabebild 20 unsichtbar sein können. Die Zonen 52, 54 und 56 stellen in Abhängigkeit des Abstands vom Fahrzeug 10 kritische, weniger kritische und teilweise unkritische Bereiche dar. In anderen Ausgestaltungen können die Zonen 52, 54, 56 in Abhängigkeit anderer Parameter, wie beispielsweise der Einsehbarkeit durch den Fahrer des Fahrzeuges, definiert werden, so dass direkt einsehbare Bereiche als unkritisch eingestuft und nicht direkt einsehbare Bereiche, wie z. B. der Bereich des toten Winkels, als kritischer Bereich eingestuft werden kann.

Ermittelt eine Berechnungseinheit der erfindungsgemäßen Anzeigeeinrichtung ein sich in der Zone 52 befindliches Hindernis 40, kann die Berechnungseinheit das Wiedergabebild derart modifizieren, dass das kritische Hindernis 40 hervorgehoben dargestellt wird, beispielsweise in roter Farbe und/oder blinkend und/oder anderweitig verändert. In ähnlicher Weise werden die Hindernisse 42 und 44, die sich in unterschiedlichen Zonen 54, 56 befinden, ebenfalls unterschiedlich dargestellt, beispielsweise mit unterschiedlichen Farben oder unterschiedlicher Helligkeit oder unterschiedlicher Luminanz. Das Hindernis 46, das sich teilweise in der Zone 54 und teilweise in der Zone 56 befindet, kann in Abhängigkeit des größeren Anteils, zu dem es sich in einer der beiden Zonen 54, 56 befindet, dargestellt werden. Die Darstellung des Hindernisses 46 entspricht der Darstellung eines Hindernisses in der Zone 54, d.h. der Zone, in der der Hauptteil des Hindernisses 46 liegt.

Unter Verweis auf die Fig. 8 ist ein weiteres beispielhaftes Wiedergabebild 20 gezeigt. Das Wiedergabebild 20 weist das Fahrzeug 10 in stilisierter Darstellung und mehrere Hindernisse 40 - 45 auf, die sich relativ zum Fahrzeug in einem gemeinsamen Bereich der Fahrzeugumgebung 30 befinden. Um dem Fahrer des Fahrzeugs 10 die Orientierung auf dem Wiedergabebild sowie das Lesen des Wiedergabebilds zu vereinfachen, kann die Berechnungseinheit sich in einem gemeinsamen Bereich in der Fahrzeugumgebung befindliche Hindernisse 40 - 45 zu einer Hindernisgruppe 48 zusammenfassen und mittels einem Hinweis 50 kennzeichnen, beispielsweise einer Klammer.

Dabei können die Hindernisse 40 - 45, wie in der Fig. 8 gezeigt, von gleicher Hindernisart sein. In weiteren Ausführungsformen können sich in einem gemeinsamen Bereich in der Fahrzeugumgebung befindliche unterschiedliche Hindernisarten zu einer Hindernisgruppe zusammengefasst werden. In einer Ausgestaltung kann der Hinweis 50 dazu ausgebildet sein, die Hindernisgruppe 48 lediglich teilweise zu umrahmen, so dass die einzelnen Hindernisse 40 - 45 noch gut zu erkennen sind. In einer weiteren Ausgestaltung kann jedoch der Hinweis 50 derart ausgestaltet sein, dass die einzelnen Hindernisse 40 - 45 vom Hinweis 50 vollständig bedeckt werden und demnach die Hindernisse 40 - 45 nicht mehr einzeln zu erkennen sind. In einer noch weiteren Ausführungsform bedeckt der Hinweis 50 zwar die Hindernisse 40 - 45, ist aber zumindest teilweise transparent, so dass die Hindernisse 40 - 45 noch teilweise einzeln zu erkennen sind.

Unter Bezugnahme auf die Fig. 9 ist ein weiteres beispielhaftes Wiedergabebild 20 gezeigt. Das in der Fig. 9 gezeigte Wiedergabebild 20 weist das Fahrzeug 10 und ein in der unmittelbaren Fahrzeugumgebung 30 ermitteltes Hindernis 40 in stilisierter oder symbolischer Darstellung auf. Zusätzlich weist das Wiedergabebild 20 der Fig. 9 einen in zwei Abschnitte 61, 62 unterteilten oberen Hinweisbereich 60 und einen in zwei Abschnitte 65, 66 unterteilten unteren Hinweisbereich 64 auf, wobei die Hinweisbereiche 60 und 64 in weiteren Ausgestaltungen jeweils nur einen Abschnitt oder mehr als zwei Abschnitte aufweisen können. Wenn die Berechnungseinheit ein Hindernis in der entfernten Fahrzeugumgebung ermittelt, kann die Berechnungseinheit denjenigen Hinweisbereich, der der ungefähren Position des im entfernten Fahrzeugbereich ermittelten Hindernis relativ zum Fahrzeug entspricht, derart modifizieren, dass der Fahrer einen Hinweis auf das in der entfernten Fahrzeugumgebung befindliche Hindernis erhält. Wenn sich beispielsweise ein sich schnell bewegendes Fahrzeug von links hinten (siehe Fig. 9) nähert, modifiziert die Berechnungseinheit die Darstellung des linken Abschnitts 65 des unteren Hinweisbereichs 64, beispielsweise mittels Schraffierung, Einfärbung oder einer anderweitiger Kennzeichnung, so dass der Fahrer darauf hingewiesen wird, dass sich ein Hindernis aus der entfernten Fahrzeugumgebung in die unmittelbare Fahrzeugumgebung 30 bewegen kann.

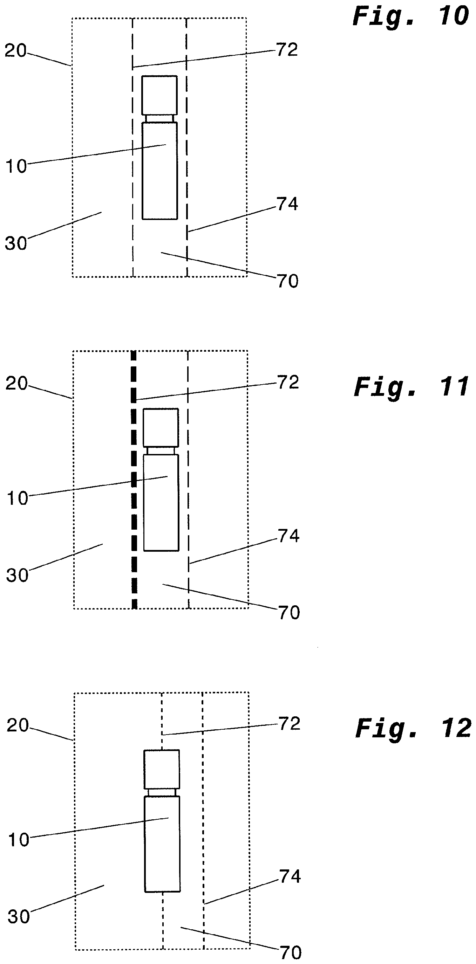

Unter Verweis auf die Fig. 10 - 12 sind weitere beispielhafte Wiedergabebilder 20 gezeigt. Die in den Fig. 10 - 12 gezeigten Wiedergabebilder 20 weisen jeweils das Fahrzeug 10 und die Fahrspur 70 des Fahrzeugs 10 begrenzenden Fahrbahnlinien 72, 74 auf. Die Fahrbahnlinien 72, 74 können beispielsweise den tatsächlich auf der Fahrbahn befindlichen Fahrbahnlinien entsprechen. Wenn das Fahrzeug 10 die Spur wie gewünscht hält (siehe Fig. 10), sind die Fahrbahnlinien 72, 74 relativ zum Fahrzeug ortsfest und mit identischer Form dargestellt. Wenn jedoch die Berechnungseinheit erfasst, dass das Fahrzeug 10 ungewollt von der Spur abweicht, wenn beispielsweise die Berechnungseinheit erfasst, dass kein Blinker gesetzt wurde, kann die Berechnungseinheit das Wiedergabebild 20 derart modifizieren, dass diejenige Fahrbahnlinie (in der Fig. 11 die Fahrbahnlinie 72) hervorgehoben dargestellt wird. Dadurch kann dem Fahrer signalisiert werden, dass eine ungewollte Spurabweichung vorliegt.

Wenn jedoch die Berechnungseinheit einen gewollten Spurwechsel des Fahrzeugs 10 erfasst, kann die Berechnungseinheit während dem Spurwechsel die Fahrbahnlinien 72, 74 derart auf dem Wiedergabebild 20 erzeugen, dass die Fahrbahnlinien der tatsächlichen Position der Fahrbahnlinien 72, 74 relativ zum Fahrzeug entsprechen (siehe Fig. 12).

### Bezugszeichenliste

- 2: Hauptspiegel
- 4: Weitwinkelspiegel
- 6: A-Säule
- 7: Instrumententafel
- 8: Frontscheibe
- 9: Lenkrad
- 10: Fahrzeug
- 11 - 16: einsehbare indirekte Sichtbereiche
- 17, 18: nicht einsehbare indirekte Sichtbereiche
- 20, 20a - 20d: Wiedergabebild
- 21 - 25: einsehbare direkte Sichtbereiche
- 26: nicht einsehbarer direkter Sichtbereich
- 30: unmittelbare Fahrzeugumgebung
- 40 - 46: Hindernis
- 48: Hindernisgruppe
- 50: Hinweis
- 52, 54, 56: Zonen
- 60: oberer Hinweisbereich
- 61, 62: Abschnitte des oberen Hinweisbereichs
- 64: unterer Hinweisbereich
- 65, 66: Abschnitte des unteren Hinweisbereichs
- 70: Fahrspur
- 72, 74: Fahrbahnlinien

## Patentansprüche

1. Anzeigeeinrichtung für ein Fahrzeug (10), insbesondere Nutzfahrzeug, mit:
einer am Fahrzeug (10) anbringbaren Erfassungsvorrichtung, die dazu ausgebildet ist, zumindest einen Teil der unmittelbaren Fahrzeugumgebung (30) zu erfassen und dem erfassten Teil der unmittelbaren Fahrzeugumgebung (30) entsprechende Signale zu erzeugen,
einer mit der Erfassungsvorrichtung in Verbindung stehenden Berechnungseinheit, die dazu ausgebildet ist, die von der Erfassungsvorrichtung erzeugten Signale zu empfangen, Hindernisse (40 - 46) in der erfassten unmittelbaren Fahrzeugumgebung (30) zu ermitteln und ein Wiedergabebild (20, 20a - 20d) zu erzeugen, das das Fahrzeug (30) in stilisierter oder symbolischer Darstellung und das in der unmittelbaren Fahrzeugumgebung (30) ermittelte Hindernis (40 - 46) in stilisierter oder symbolischer Darstellung und in Relativposition zum Fahrzeug (10) aufweist, und
einer mit der Berechnungseinheit in Verbindung stehenden Wiedergabeeinheit, die dazu ausgebildet ist, das von der Berechnungseinheit erzeugte Wiedergabebild (20, 20a - 20d) im Inneren des Fahrzeugs (10) durch den Fahrer einsehbar darzustellen,
**dadurch gekennzeichnet, dass** die Berechnungseinheit ferner dazu ausgebildet ist, eine Bewegungsgeschwindigkeit und/oder eine Bewegungsrichtung des Hindernisses (40 - 46) zu ermitteln und die Bewegung des ermittelten Hindernisses (40 - 46) relativ zum Fahrzeug (10) auf den Wiedergabebildern (20, 20a - 20d) kontinuierlich oder zeitlich getaktet darzustellen.

2. Anzeigeeinrichtung nach Anspruch 1, wobei das Wiedergabebild (20, 20a - 20d) eine Darstellung des Fahrzeugs (10) und des ermittelten Hindernisses (40 - 46) in Draufsicht oder in Vogelperspektive in Vorwärtsrichtung des Fahrzeugs (10) von hinten nach vorne ist.

3. Anzeigeeinrichtung nach einem der vorhergehenden Ansprüche, wobei die Berechnungseinheit ferner dazu ausgebildet ist, die Art und/oder die Größe des ermittelten Hindernisses (40 - 46) zu bestimmen und die stilisierte oder symbolische Darstellung des ermittelten Hindernisses (40 - 46) in Abhängigkeit der bestimmten Art und/oder Größe des Hindernisses (40 - 46) zu modifizieren.

4. Anzeigeeinrichtung nach einem der vorhergehenden Ansprüche, wobei
die Erfassungsvorrichtung ferner dazu ausgebildet ist, zumindest einen Teil einer entfernten Fahrzeugumgebung zu erfassen und dem erfassten Teil der entfernten Fahrzeugumgebung entsprechende Signale zu erzeugen, und
die Berechnungseinheit ferner dazu ausgebildet ist, Hindernisse (40 - 46) in der entfernten Fahrzeugumgebung zu ermitteln und das Wiedergabebild (20, 20a - 20b) derart zu modifizieren, dass im Wiedergabebild (20, 20a - 20d) ein Hinweisbereich (60, 64) enthalten ist, der auf das in der entfernten Fahrzeugumgebung ermittelte Hindernis (40 - 46) und die Relativposition des ermittelten Hindernisses (40 - 46) zum Fahrzeug (10) hinweist.

5. Anzeigeeinrichtung nach einem der vorhergehenden Ansprüche, wobei die Wiedergabeeinheit dazu ausgebildet ist, das Wiedergabebild (20, 20a - 20d) auf die Frontscheibe (8) des Fahrzeugs (10) zu projizieren, bevorzugt am unteren Bereich der Frontscheibe (8) und mittig vor den Fahrer des Fahrzeugs (10).

6. Anzeigeeinrichtung nach einem der Ansprüche 1 bis 4, wobei die Wiedergabeeinheit ein Head Up Display, ein OLED-Display und/oder eine Displayeinheit im Armaturenbrett aufweist.

7. Anzeigeeinrichtung nach einem der vorhergehenden Ansprüche, wobei die Erfassungsvorrichtung dazu ausgebildet ist, die gesamte unmittelbare Fahrzeugumgebung (30) zu erfassen, die sich vollständig um das Fahrzeug (10) erstreckt.

8. Anzeigeeinrichtung nach einem der vorhergehenden Ansprüche, wobei die Erfassungsvorrichtung zumindest einen Radarsensor und/oder zumindest einen Ultraschallsensor und/oder zumindest eine Kamera aufweist.

9. Anzeigeeinrichtung nach einem der vorhergehenden Ansprüche, wobei die Berechnungseinheit ferner dazu ausgebildet ist, in der unmittelbaren Fahrzeugumgebung (30) ermittelte Hindernisse (40 - 46) zu einer Hindernisgruppe (48) zusammenzufassen und das Wiedergabebild (20, 20a - 20d) derart zu modifizieren, dass das Wiedergabebild (20, 20a - 20d) einen Hinweis (50) aufweist, der auf die Hindernisgruppe (48) hinweist.

10. Anzeigeeinrichtung nach einem der vorhergehenden Ansprüche, wobei die Berechnungseinheit ferner dazu ausgebildet ist, die erfasste unmittelbare Fahrzeugumgebung (30) in zumindest zwei Zonen (52, 54, 56) zu unterteilen und in Abhängigkeit davon, in welcher Zone (52, 54, 56) sich das ermittelte Hindernis (40 - 46) befindet, die stilisierte oder symbolische Darstellung des Hindernisses (40 - 46) zu modifizieren.

11. Anzeigeeinrichtung nach einem der vorhergehenden Ansprüche, wobei die Berechnungseinheit ferner dazu ausgebildet ist, eine Bewegungsgeschwindigkeit und/oder eine Bewegungsrichtung des Hindernisses (40 - 46) zu ermitteln und in Abhängigkeit der Bewegungsgeschwindigkeit und/oder der Bewegungsrichtung die stilisierte oder symbolische Darstellung des Hindernisses (40 - 46) zu modifizieren.

12. Anzeigeeinrichtung nach einem der vorhergehenden Ansprüche, wobei die Berechnungseinheit ferner dazu ausgebildet ist, eine Bewegungsgeschwindigkeit und/oder eine Bewegungsrichtung des Hindernisses (40 - 46) zu ermitteln und die Trajektorie des ermittelten Hindernisses (40 - 46) zu bestimmen und als Hindernisspur auf dem Wiedergabebild (20, 20a - 20d) darzustellen.

13. Anzeigeeinrichtung nach Anspruch 12, wobei die Berechnungseinheit ferner dazu ausgebildet ist, die zukünftige Trajektorie des ermittelten Hindernisses (40 - 46) abzuschätzen und auf dem Wiedergabebild (20, 20a - 20d) als zukünftige Hindernisspur darzustellen.

14. Anzeigeeinrichtung nach einem der vorhergehenden Ansprüche, wobei die Berechnungseinheit ferner dazu ausgebildet ist, auf dem Wiedergabebild Fahrbahnlinien (72, 74) darzustellen, die eine Fahrspur des Fahrzeugs (10) anzeigen.

## Claims

1. A display system for a vehicle (10), in particular a commercial vehicle, comprising:
a capturing device mountable to a vehicle (10) and adapted to capture at least part of the immediate vehicle environment (30) and to generate signals corresponding to the captured part of the immediate vehicle environment (30),
a calculation unit associated with said capturing device and adapted to receive the signals generated by the capturing device, to determine obstacles (40 - 46) in the captured immediate vehicle environment (30), and to generate a display image (20, 20a - 20d) displaying both the vehicle (30) in a stylized or symbolic representation and the obstacle (40 - 46) determined in the immediate vehicle environment in a stylized or symbolic representation and its relative position with regard to the vehicle (10), and
a rendering unit associated with the calculation unit and adapted to display the display image (20, 20a - 20d) generated by the calculation unit in the vehicle (10) and visible to the driver,
**characterized in that** the calculation unit is further adapted to determine a motion speed and/or motion direction of the obstacle and to illustrate the motion of the determined obstacle (40 - 46) relative to the vehicle (10) on the display images (20, 20a - 20d) in a continuous or clocked manner.

2. The display system according to claim 1, wherein the display image (20, 20a - 20d) is a representation of the vehicle (10) and the determined obstacle (40 - 46) in top view or bird's-eye view in the forward direction of the vehicle (10) from back to front.

3. The display system according to one of the preceding claims, wherein the calculation unit is further adapted to determine the kind and/or dimension of the identified obstacle (40 - 46) and to modify the stylized or symbolic representation of the identified obstacle (40 - 46) dependent on the determined kind and/or dimension of the obstacle (40 - 46).

4. The display system according to one of the preceding claims, wherein
the capturing device is further adapted to capture at least part of a remote vehicle environment and to generate signals corresponding to the captured part of the remote vehicle environment, and
the calculation unit is further adapted to determine obstacles (40 - 46) in the remote vehicle environment and to modify the display image (20, 20a - 20b) such, that the display image (20, 20a - 20d) includes an information field (60, 64) which hints to the obstacle (40 - 46) determined in the remote vehicle environment, and to the relative position of the determined obstacle (40 - 46) with regard to the vehicle (10).

5. The display system according to one of the preceding claims, wherein the rendering unit is adapted to project the display image (20, 20a - 20d) to the windshield (8) of the vehicle (10), preferably at the lower portion of the windshield (8) and centrically ahead of the driver of the vehicle (10).

6. The display system according to one of the preceding claims, wherein the rendering unit comprises a head-up display, an OLED display and/or a display unit in the instrument panel.

7. The display system according to one of the preceding claims, wherein the capturing device is adapted to capture the entire immediate vehicle environment (30) around the vehicle (10).

8. The display system according to one of the preceding claims, wherein the capturing device comprises at least one radar sensor and/or at least one ultrasonic sensor and/or at least one camera.

9. The display system according to one of the preceding claims, wherein the calculation unit is further adapted to combine the obstacles (40-46) determined in the immediate vehicle environment (30) into a group of obstacles (48), and to modify the display image (20, 20a-20d) such that the display image (20, 20a-20d) comprises a hint (50) pointing to the group of obstacles (48).

10. The display system according to one of the preceding claims, wherein the calculation unit is further adapted to divide the captured immediate vehicle environment (30) into at least two zones (52, 54, 56), and to modify the stylized or symbolic representation of the obstacle (40 - 46) dependent on the zone (52, 54, 56) in which the determined obstacle (40 - 46) is located.

11. The display system according to one of the preceding claims, wherein the calculation unit is further adapted to determine a motion speed and/or motion direction of the obstacle (40 - 46), and to modify the stylized or symbolic representation of the obstacle (40 - 46) dependent on the motion speed and/or motion direction.

12. The display system according to anyone of the preceding claims, wherein the calculation unit is further adapted to determine a motion speed and/or a motion direction of the obstacle (40 - 46) and to determine the trajectory of the determined obstacle (40 - 46) and to illustrate the same on the display image (20, 20a - 20d) in the form of an obstacle trace.

13. The display system according to claim 12, wherein the calculation unit is further adapted to evaluate the prospective trajectory of the determined obstacle (40-46) and illustrate the same on the display image (20, 20a-20d) as prospective obstacle trace.

14. The display system according to one of the preceding claims, wherein the calculation unit is further adapted to illustrate the road lines (72, 74) on the display image, which lines illustrate a lane of the vehicle (10).

## Revendications

1. Dispositif d'affichage pour un véhicule (10), en particulier véhicule utilitaire, avec :
un dispositif de détection pouvant être monté sur le véhicule (10), qui est réalisé pour détecter au moins une partie de l'environnement immédiat du véhicule (30) et générer des signaux correspondant à la partie détectée de l'environnement immédiat du véhicule (30),
une unité de calcul en communication avec le dispositif de détection, qui est réalisée pour recevoir les signaux générés par le dispositif de détection, déterminer des obstacles (40 - 46) dans l'environnement immédiat du véhicule (30) détecté et générer une image de rendu (20, 20a - 20d), qui présente le véhicule (30) dans une représentation stylisée ou symbolique et l'obstacle (40 - 46) déterminé dans l'environnement immédiat du véhicule (30) dans une représentation stylisée ou symbolique et dans une position relative par rapport au véhicule (10), et
une unité de rendu communiquant avec l'unité de calcul, qui est réalisée pour représenter l'image de rendu (20, 20a - 20d) générée par l'unité de calcul de façon visible par le conducteur à l'intérieur du véhicule (10),
**caractérisé en ce que** l'unité de calcul est réalisée en outre pour déterminer une vitesse de déplacement et/ou un sens de déplacement de l'obstacle (40 - 46) et représenter le déplacement de l'obstacle (40 - 46) déterminé par rapport au véhicule (10) sur des images de rendu (20, 20a - 20d) en continu ou de manière cadencée.

2. Dispositif d'affichage selon la revendication 1, dans lequel l'image de rendu (20, 20a - 20d) est une représentation du véhicule (10) et de l'obstacle (40 - 46) déterminé dans une vue de dessus ou une vue en perspective dans la marche avant du véhicule (10) de l'arrière vers l'avant.

3. Dispositif d'affichage selon l'une quelconque des revendications précédentes, dans lequel l'unité de calcul est réalisée en outre pour déterminer le type et/ou la taille de l'obstacle (40 - 46) déterminé et modifier la représentation stylisée ou symbolique de l'obstacle (40 - 46) déterminé en fonction du type et/ou de la taille déterminée de l'obstacle (40 - 46).

4. Dispositif d'affichage selon l'une quelconque des revendications précédentes, dans lequel
le dispositif de détection est réalisé en outre pour détecter au moins une partie d'un environnement éloigné du véhicule et générer des signaux correspondant à la partie détectée de l'environnement éloigné du véhicule,
l'unité de calcul est réalisée en outre pour déterminer des obstacles (40 - 46) dans l'environnement éloigné du véhicule et modifier l'image de rendu (20, 20a - 20d) de telle manière qu'une zone de notification (60, 64) est contenue dans l'image de rendu (20, 20a - 20d), qui signale l'obstacle (40 - 46) déterminé dans l'environnement éloigné du véhicule et la position relative de l'obstacle (40 - 46) déterminé par rapport au véhicule (10).

5. Dispositif d'affichage selon l'une quelconque des revendications précédentes, dans lequel l'unité de rendu est réalisée pour projeter l'image de rendu (20, 20a - 20d) sur le pare-brise (8) du véhicule (10), de préférence au bord inférieur du pare-brise (8) et au milieu devant le conducteur du véhicule (10).

6. Dispositif d'affichage selon l'une quelconque des revendications 1 à 4, dans lequel l'unité de rendu présente un affichage tête haute, un affichage OLED et/ou une unité d'affichage dans le tableau de bord.

7. Dispositif d'affichage selon l'une quelconque des revendications précédentes, dans lequel l'unité de détection est réalisée pour détecter l'ensemble de l'environnement immédiat du véhicule (30), qui s'étend entièrement autour du véhicule (10).

8. Dispositif d'affichage selon l'une quelconque des revendications précédentes, dans lequel le dispositif de détection présente au moins un capteur radar et/ou au moins un capteur à ultrasons et/ou au moins une caméra.

9. Dispositif d'affichage selon l'une quelconque des revendications précédentes, dans lequel l'unité de calcul est réalisée en outre pour regrouper des obstacles (40 - 46) déterminés dans l'environnement immédiat du véhicule (30) en un groupe d'obstacles (48) et modifier l'image de rendu (20, 20a - 20d) de telle manière que l'image de rendu (20, 20a - 20d) présente une notification (50), qui signale le groupe d'obstacles (48).

10. Dispositif d'affichage selon l'une quelconque des revendications précédentes, dans lequel l'unité de calcul est réalisée en outre pour diviser l'environnement immédiat du véhicule (30) détecté en au moins deux zones (52, 54, 56) et en fonction de la zone (52, 54, 56) dans laquelle se trouve l'obstacle (40 - 46) déterminé, modifier la représentation stylisée ou symbolique de l'obstacle (40 - 46).

11. Dispositif d'affichage selon l'une quelconque des revendications précédentes, dans lequel l'unité de calcul est réalisée en outre pour déterminer une vitesse de déplacement et/ou un sens de déplacement de l'obstacle (40 - 46) et en fonction de la vitesse de déplacement et/ou du sens de déplacement, modifier la représentation stylisée ou symbolique de l'obstacle (40 - 46).

12. Dispositif d'affichage selon l'une quelconque des revendications précédentes, dans lequel l'unité de calcul est réalisée en outre pour déterminer une vitesse de déplacement et/ou un sens de déplacement de l'obstacle (40 - 46) et déterminer la trajectoire de l'obstacle (40 - 46) déterminé et la représenter sous forme de voie d'obstacle sur l'image de rendu (20, 20a - 20d).

13. Dispositif d'affichage selon la revendication 12, dans lequel l'unité de calcul est réalisée en outre pour estimer la future trajectoire de l'obstacle (40 - 46) déterminé et la représenter sur l'image de rendu (20, 20a - 20d) sous forme de voie d'obstacle future.

14. Dispositif d'affichage selon l'une quelconque des revendications précédentes, dans lequel l'unité de calcul est réalisée en outre pour déterminer des lignes de chaussée (72, 74) sur l'image de rendu qui affichent une voie du véhicule (10).
